# EUROPEAN PATENT APPLICATION

(11) **EP 4 563 747 A1**
(43) Date of publication of application: **04.06.2025**
(21) Application number: 24460038.3
(22) Date of filing: 19.11.2024
(51) Int. Cl.: E01C 23/088

(54) **MACHINE FOR SOIL AND AGGREGATE STABILISATION WITH A MILLING ROLLER**

(30) Priority: 28.11.2023 PL 44688623
(71) Applicant: Pronar Sp.zo.o., 17-210 Narew (PL)
(72) Inventor: Fiedorczuk, Cezary, 817-300 Siemiatycze (PL); Maslowski, Marcin, 15-196 Bialystok (PL)
(74) Representative: Dobkowska, Danuta Elzbieta

(57) **Abstract**

A soil and aggregate stabilisation machine with a milling roller containing a frame (1) with self-aligning arms (3) on which a milling roller (2) is seated via a transmission (4), characterised by the fact that the cylindrical flange (4B) of the transmission (4) has a positive element (4A) in the form of a recess connected with the positive element (3A) in the form of a spline located on the cylindrical flange (3B) of the self-aligning arm (3).

## Description

The subject of the invention is a machine for soil and aggregate stabilisation equipped with a milling roller with milling tools attached to its side surface.

Due to the diverse circumstances occurring on construction sites and during work involving soil stabilisation, it is often necessary to adapt a milling tool installed in the machine to specific tasks. The milling rollers are equipped with specially designed milling cutters optimised for effective operation in various soil and surface types. The milling cutters can be designed with diverse shapes, sizes and orientation, depending on the characteristics of soils or surfaces in which they operate. Typically, in such circumstances, a different milling machine or a machine equipped with a milling roller adjusted to a given task must be used. An easily replaceable roller mounted in a construction machine, in particular in a tractor-towed soil stabiliser, produces numerous benefits, such as flexibility, time and cost savings, multi-tasking capabilities, easy maintenance, adjustment to changeable operating conditions and performance optimisation. Therefore, an operator is able to instantly adjust the machine to various tasks and operating conditions, which in turn results in time savings. Presently, milling roller replacement systems are complex in terms of their design and operation and, additionally, roller replacement operations are very expensive and require special auxiliary units for milling roller assembly or disassembly.

The German DE19932396 patent describes a milling roller driven with a drive unit via a transmission unit and including a milling tube that can be coaxially inserted onto the roller base body and attached to it in manner facilitating replacement. The milling tube carries cutting tools on its outer surface. In this solution, cylindrical segments are interconnected by ring flanges. Even though the disclosed solution presents a milling roller quick-replacement system, it comes with certain disadvantages. They consist in the fact that the milling roller drive axis is placed inside the milling tube axis and, as a result, the milling roller diameter must be increased to ensure larger soil penetration depth during milling operations, which in turn results in machine weight increase. Moreover, the large weight of the milling roller inserted onto the roll base body necessitates using special tools.

The DE4037448 patent description presents a machine designed for street pavement milling. In that machine, the roller body is attached between a rolling radial bearing, ensuring its longitudinal stability, and a drive housing and rolling bearing, which can be shifted. The slidable rolling bearing is equipped with a centring retainer cone, and the slidable rolling bearing is shifted with a hydraulic system. Additionally, the free bearing arrangement is tensioned with an anchor. The design solution presented requires installing an expensive tensioning mechanism with an anchor and setting cylinder over the milling roller.

The American US4704045 patent application presents a milling unit solution which facilitates width adjustment by installing diverse cylindrical segments. In this solution, the cylindrical segments are connected by means of a simple plug-in joint. Even though this solution features a milling roller quick-replacement system, it still comes with certain disadvantages. One of them consists in the fact that the milling roller is operated by a hydrostatic drive, as hydraulic motors are installed on both sides of the milling roller. Additionally, the segments are connected via a simple plug-in joint which fails to ensure sufficient milling rotor centring.

The DE3145713 patent application describes a milling roller solution for a street pavement milling machine. The milling roller is supported and driven by a bearing and driving unit which supports the roller with a supporting frame. One side of the milling roller features the bearing and driving unit drive together with the ring shoulder on which the milling tube is seated on the other side. On the opposite roller side, in the drive location, the fastening flange which stabilises the milling tube is installed. Nevertheless, this concept features a hydrostatic drive for the milling roller, which is placed inside this roller. The disadvantageous aspect of the solution described consists in the fact that the hydraulic drive performance is low, which results in efficiency decrease. Additionally, the necessity to attach milling tubes axially using ring shoulders in order to ensure larger soil penetration depth during milling operations, results in the necessity to increase the milling roller diameter. This in turn results in the machine weight increase.

The DE102012008252 patent application presents a solution featuring a milling roller consisting of a transmission fixed permanently to the milling drum housing, and the milling drum, inside of which a positive coupling is placed to ensure torque transmission. In this solution, the milling roller is mounted after disassembling the side wall of the rotor box, which is placed on the free bearing side. The current state of the art also includes rotor replacement systems in which the milling drum bearing is designed in a manner facilitating its disconnection for milling drum replacement, i.e. the drum can be removed from its housing following the bearing removal. For example, such rotor replacement systems are presented DE 102 32 489 A1 and DE 40 37 448 A1 patent descriptions, and in the DE 200 23 999 U1 utility model description. Indeed, the solution includes a system for quick milling roller replacement designed in a manner suitable for machines with an integrated milling roller drive. However, in the case of machines like tractor-towed soil stabilisers in which the milling roller is driven by a mechanical vehicle separate from the machine, this solution is disadvantageous, as it forces disassembly of the machine side wall, which compromises the machine body stiffness and increases its weight.

The EP1840268 patent description presents the milling roller solution with a replaceable milling roller which is placed coaxially in relation to the milling roll. The milling roller is attached with centring rings. The centring rings have numerous, mutually complementing, seating surfaces with various support diameters, which are placed concentrically to the milling roller axis. In this solution, the milling roller is mounted by inserting it onto the shaft axis until it rests on centring rings. The solution includes a system for quick milling roller replacement designed in a manner suitable for machines with an integrated milling roller drive. However, in the case of machines like tractor-towed soil stabilisers in which the milling roller is driven by a mechanical vehicle separate from the machine, this solution is disadvantageous, as it forces disassembly of the machine side wall, which compromises the machine body stiffness and increases its weight.

The purpose of the invention is to provide a solution facilitating mounting a milling roller in a construction machine of the soil stabiliser type in a manner ensuring quick replacement of milling rollers and facilitating handling of the disassembles milling rollers. The additional purpose consists in ensuring milling roller replacement time and effort minimisation.

The essence of the invention is a soil and aggregate stabilisation machine with the milling roller containing a frame with self-aligning arms on which the milling roller is seated via a transmission, characterised in that the cylindrical flange of the transmission has a positive element in the form of a recess connected with the positive element in the form of a spline located on the cylindrical flange of the self-aligning arm.

Preferably, the positive elements in the form of a recess and spline have the shape of a ring sector with the angle α ranging from 15° to 180°

Preferably, the transmission is connected with the self-aligning arm with bolts, and lock washers are placed between the bolt heads and cylindrical flange of the self-aligning arm.

Another advantageous feature of the solution consists in the fact that a drive sleeve is seated on the transmission drive shaft using a positive attachment in the form of splines, which is additionally bolted to the shaft.

Preferably, a centring sleeve with a seated pulley is mounted between cylindrical flanges of the transmission and self-aligning arm.

The characteristic feature of the machine for soil and aggregate stabilisation with a milling roller is the possibility of simple and quick working tool replacement.

Applying the positive connection in the form of a recess on the cylindrical flange of the transmission and in the form of a spline on the cylindrical flange of the self-adjusting arm protects against rotation and retains a correct position of the milling roller in relation to the entire machine drive. The centring sleeve location inside the cylindrical flanges of the transmission and the self-aligning arm enhances balancing and co-axiality, as well as easiness and speed of milling roller assembly on the machine frame, eliminating the necessity to use other large-sized machinery, e.g. cranes. The drive sleeve location inside the centring sleeve results in the fact that the shaft-drive connection is placed in the least contaminated area. The splined connection of the drive sleeve with the transmission shaft plus the application of the securing bolt enhances the roller drive disconnection, without the necessity for any drive transmission system adjustments.

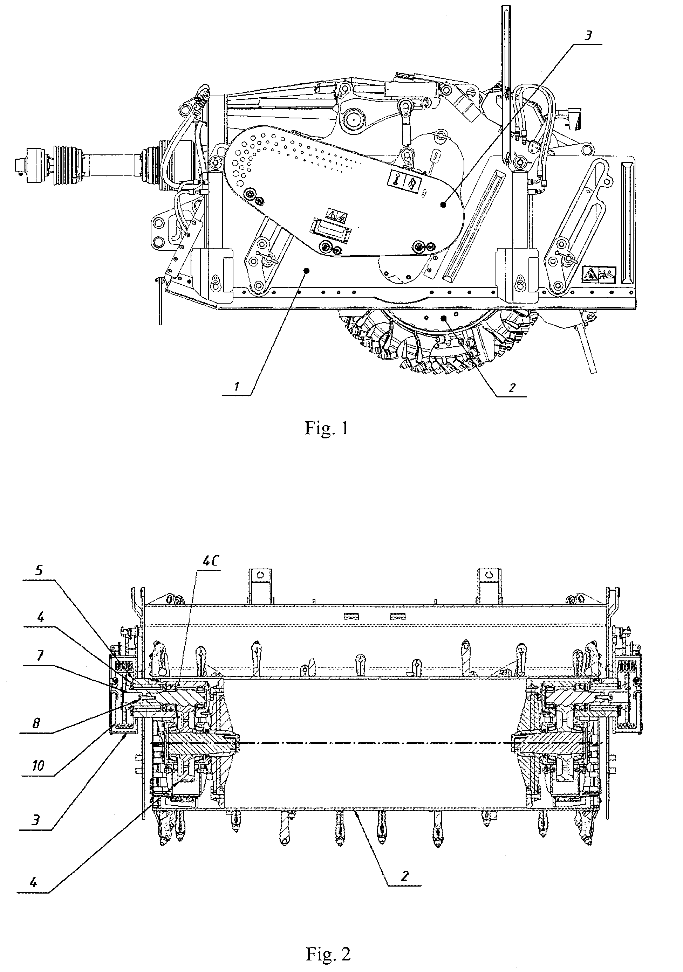

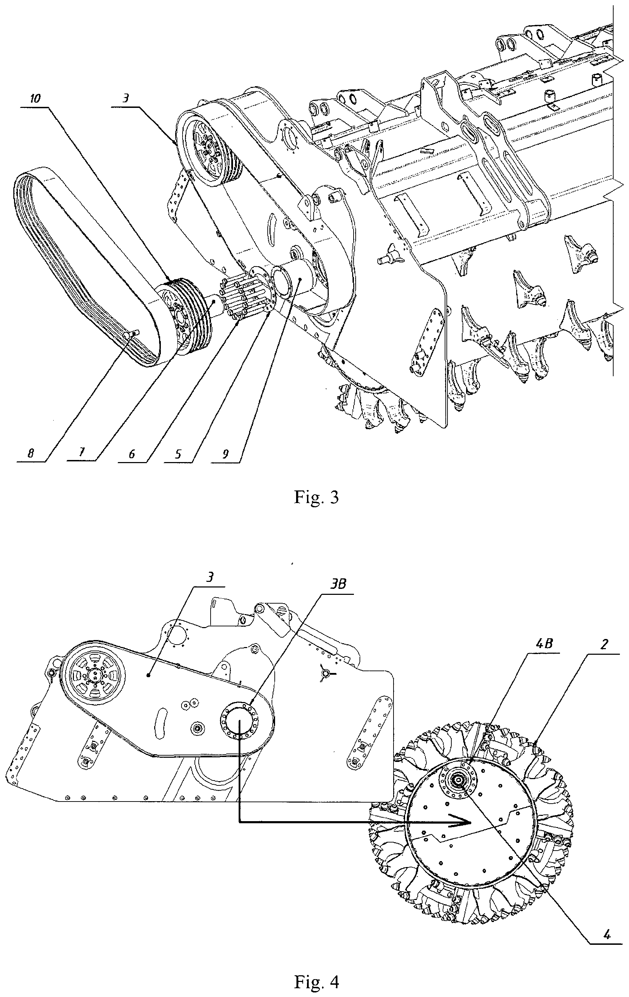

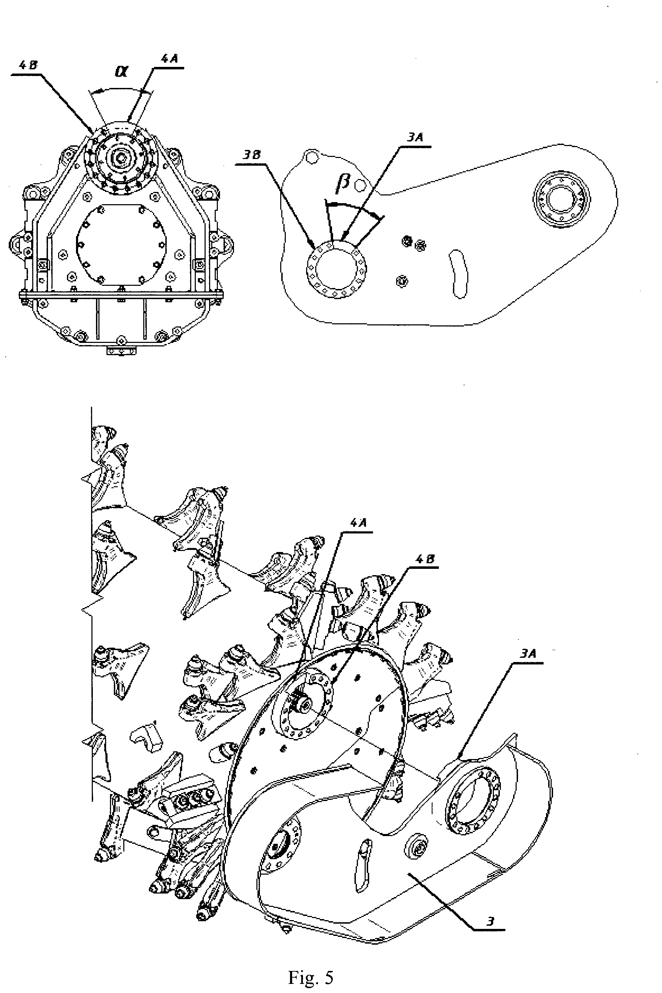

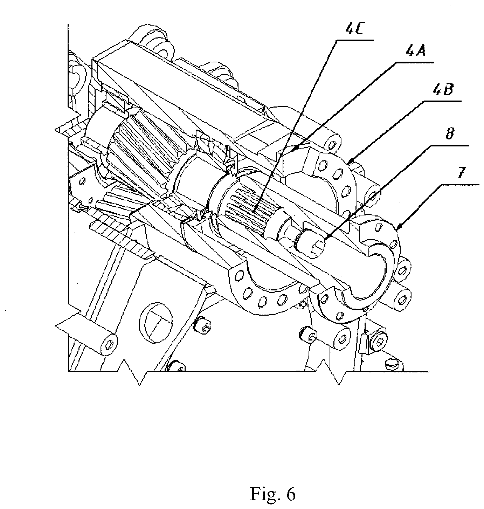

The subject of the invention is reproduced in an embodiment in the drawing, where fig. 1 presents a side view of the tractor-towed soil stabiliser with a milling roller attached; fig. 2 presents attachment of the roller to the soil stabiliser within the axial section of the milling roller; fig. 3 presents the expanded view of the positive connection between the milling roller and the machine; fig. 4 presents the example and direction of removing the roller from the machine; fig. 5 presents the shape of the positive connection between the milling roller and machine arm; and fig. 6 presents the shape and connection of the drive sleeve with the milling roller.

The machine for soil and aggregate stabilisation with a milling roller, in particular a tractor-towed soil stabiliser with a replaceable roller includes the frame 1, to which the milling roller 2 is attached by means of self-aligning arms 3. The mechanism connecting the milling roller 2 with the self-aligning arm 3 consists of a transmission 4 seated in a milling roller 2, connected with the self-aligning arm 3 by means of a centring sleeve 9 secured against movement with a lock washer 5 and bolts 6. The milling roller 2 is retained in a correct position against the frame 1 by a positive connection constituting the first positive element 4A on the cylindrical flange 4B of the transmission 4, and the second positive element 3A on the cylindrical flange 3B of the self-aligning arm 3. The positive elements 3A on the cylindrical flange 3B of the self-aligning arm 3 have the form of splines, and the positive elements 4A on the cylindrical flange 4B have the form of recesses/reliefs. The recesses/reliefs and splines of the positive elements 3A and 4A on cylindrical flanges 3B and 4B are shaped as a ring sector with the angle α ranging from 15° to 180°. A drive sleeve 7 secured against displacement with the bolt 8 is seated on the drive shaft 4C of the transmission 4. The drive torque is transferred via the pulley 10 connected with the drive sleeve 7. The milling roller 2 is disassembled by removing the pulley 10 and unscrewing the bolt 8 in order to slide the drive sleeve 7 out. Next, the bolts 6 are unscrewed, the lock washers 5 are removed, and the centring sleeve 9 is slid out. The same disassembly procedure applies to either side of the machine. Following completion of these operations, the milling roller 2 can be removed. To this end, the machine frame 1 must be lifted or a roller removal trolley not presented in the figure must be used. The milling roller 2 installation procedure steps must be completed in the reverse order.

Component designations:
1 - frame
2 - milling roller 3 - self-aligning arm
3A - second positive element
3B - self-aligning arm cylindrical flange
4-transmission
4A - first positive element
4B - transmission cylindrical flange
4C - drive shaft
5 - lock washer
6 - bolt
7 - drive sleeve
8 - shaft bolt
9 - centring sleeve
10 - pulley

## Claims

1. A soil and aggregate stabilisation machine with the milling roller containing a frame with self-aligning arms on which the milling roller is seated via a transmission, **characterised in that** the cylindrical flange (4B) of the transmission (4) has a positive element (4A) in the form of a recess connected with the positive element (3A) in the form of a spline located on the cylindrical flange (3B) of the self-aligning arm (3).

2. According to claim 1, the machine is **characterised in that** the recess of the positive element (4A) is shaped as a ring sector with the angle α ranging from 15° to 180°.

3. According to claim 2, the machine is **characterised in that** the spline of the positive element (3A) is shaped as a ring sector with the angle β ranging from 15° to 180°.

4. According to claim 1, the machine is **characterised in that** the transmission (4) is connected with the self-aligning arm (3) by means of bolts (6).

5. According to claim 4, the machine is **characterised in that** there is a lock washer (5) installed between the bolt heads (6) and the cylindrical flange (3B) of the self-aligning arm (3).

6. According to claim 1, the machine is **characterised in that** a drive sleeve (7) is seated on the drive shaft (4C) of the transmission (4) by means of a positive connection.

7. According to claim 6, the machine is **characterised in that** the positive connection is in the form of splines.

8. According to claim 6, the machine is **characterised in that** the drive sleeve (7) is connected with the drive shaft (4C) by means of a bolt (8).

9. According to claim 6, the machine is **characterised in that** the centring sleeve (9) is mounted between cylindrical flanges (3B) of the self-aligning arm (3 and 4B) of the transmission (4) and the drive sleeve (7).

10. According to claim 6, the machine is **characterised in that** the pulley (10) is seated on the drive sleeve (7).
